# EUROPEAN PATENT APPLICATION

(11) **EP 0 970 872 A2**
(43) Date of publication of application: **12.01.2000**
(21) Application number: 99112555.0
(22) Date of filing: 01.07.1999
(51) Int. Cl.: B62D 1/14, B62D 51/04

(54) **Hand guide roller of manually steering type**

(30) Priority: 07.07.1998 JP 498098
(71) Applicant: Taikyoku kenki Co., Ltd., Kazo-shi, Saitama-ken (JP)
(72) Inventor: Mutsuji, Masafumi, 1-chome, Kazo-shi, Saitama-ken (JP); Sawano, Hidetoshi, 1-chome, Kazo-shi, Saitama-ken (JP)
(74) Representative: Heusler, Wolfgang, Dipl.-Ing.

(57) **Abstract**

A hand guide roller comprises a front support frame (2) for supporting a front roller (4) and a rear support frame (3) for supporting a rear roller (5), which are turnably and mutually connected, and the rear supporting frame (3) is directly or indirectly connected with the handle bar (9).

The horizontal action of the handle bar (9) is linked with the steering directional action of the rear roller (5) at the rear supporting frame (3).

## Description

### FIELD OF THE INVENTION

The present invention relates to a hand guide roller of manually steering type for leveling ground of roadbed and pavement, and more particularly to a hand guide roller of manually steering type to be steered by pushing and pulling a handle by man power in a horizontal direction.

### BACKGROUND OF THE INVENTION

With respect to rollers for preparing the ground of roadbed and pavement, there are hand guide rollers among comparatively small sized rollers. This is demanded for simpleness in structure because of small size, and therefore, the steering is manual by pushing and pulling the handle in the horizontal direction by manpower.

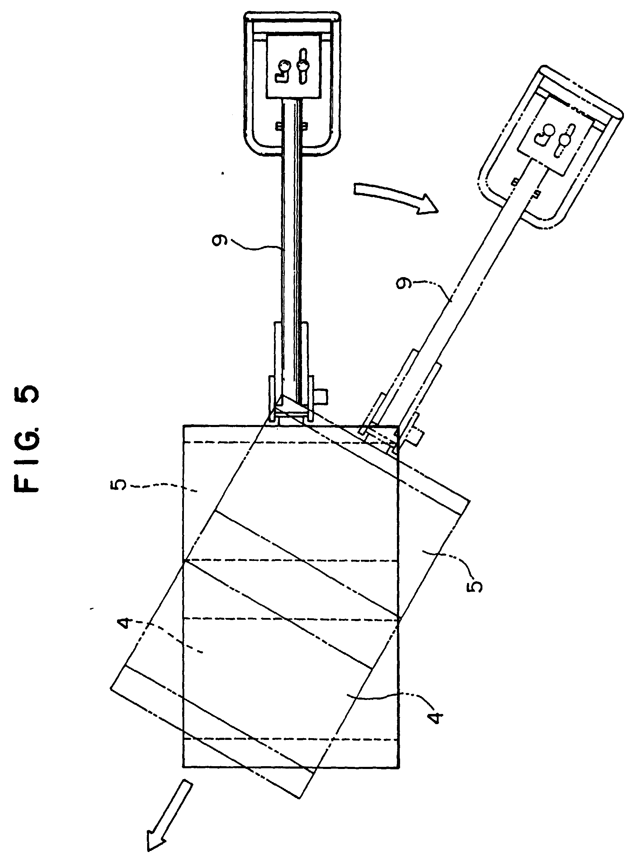

As one example of the prior arts, there is an embodiment where front and rear rollers are supported by a one main body frame, and a handle bar is fixed to the rear part of the main body frame. Advancing directions are, as shown in Fig.5, changed by pushing and pulling the handle bar 9 by manpower in the horizontal directions to steer the front and rear rollers 4, 5 together with the frame. Since this structure is not provided with the steering mechanism, it is very simple and economical in production cost, and thus, such a structure is most suitable to the hand guide roller.

However, in this structure, when steering, the guide roller must be moved as a whole, and for pushing and pulling the handle, physical strength is required to a certain extent. As shown in Fig.5, when the guide roller is directed to the right, a handle is turned to the left, and when the guide roller is directed to the left, the handle is turned to the right (the latter is not shown), and the steering is made in the reverse to the an actual direction, and so experience is required for operation.

The invention has been designed in view of problems involved with the prior art, and the man power is not required so much, and accordingly it is an object of this invention to offer such a hand guide roller of manually steering type which can be steered in the turning direction of the handle bar, and is compact in the steering structure.

### SUMMARY OF THE INVENTION

Therefore, this invention is characterized by mutually and turnably connecting a front support frame for supporting a front roller and a rear support frame for supporting a rear roller, directly or indirectly connecting the handle bar to a rear supporting frame, and linking horizontal action of the handle bar with the steering directional action of the rear roller.

The connection between the front and rear supporting frames may depend upon any one of a mechanism via a bearing and turning axis or a mechanism via the turning bearing, as far as mutually turnable mechanism. Both frames may be directly connected or indirectly connected (for example, as shown in the embodiment, the connection via a base plate 30).

The handle bar may be connected either directly or indirectly to the rear supporting frame, but the structure must be that the actuation of the handle bar must be transmitted, as it is, to the steering actuation of the rear supporting frame. Herein, the "indirect connection" is, as mentioned in a later embodiment, meant by such a connection via a rod as a linking mechanism.

The present invention is that if the handle bar is pushed or pulled horizontally, the actuation of the handle bar is transmitted as it is to the steering actuation of the rear supporting frame, so that the horizontally directional actuation of the handle bar is linked with the steering directional actuation of the rear roller. Namely, if the handle bar is pushed to the right, the rear roller is tilted right upward, and if advancing under such a state, the car is steered to the right direction. Reversely, if the handle bar is pushed to the left, the car is steered to the left direction. Thus, the direction of moving the handle bar agrees with the steering direction of the car main body, so that an operator is not demanded for experience and can easily steer. The steering structure is basically simple in that the front supporting frame and the rear supporting frame are mutually turnable, resulting in low production cost.

The rear supporting frame for supporting the rear roller is linked with the pushing and pulling of the handle bar. The smaller the supporting frame, the physical strength for steering is enough with a small amount. Therefore, as shown in a later mentioned embodiment, if the rear supporting frame is formed to be small (for example, the rear supporting frame is composed only over of the rear roller such that the front supporting frame covers thereover), the steering is possible not requiring the physical forth so much.

### BRIEF DESCRIPTION OF THE DRAWINGS

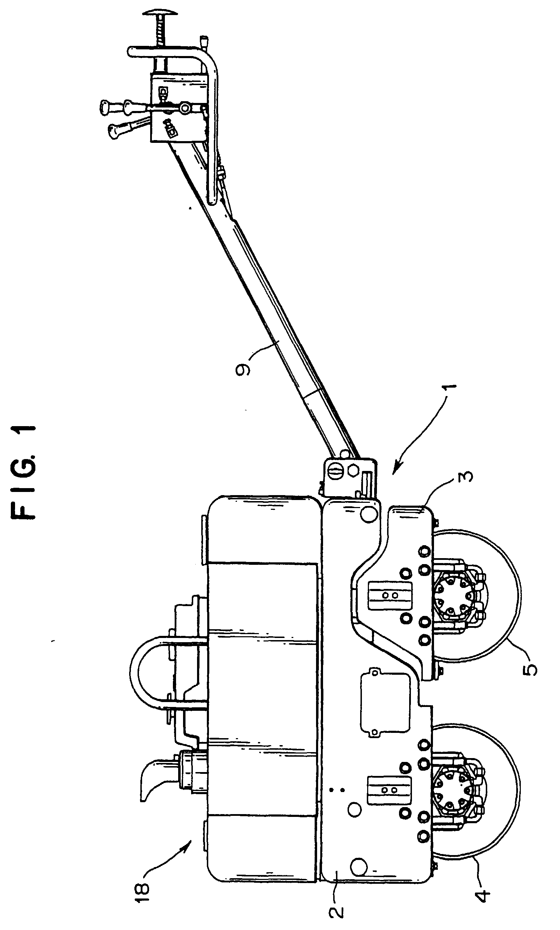

Fig.1 is a side view for explaining the structure of one embodiment of the invention;

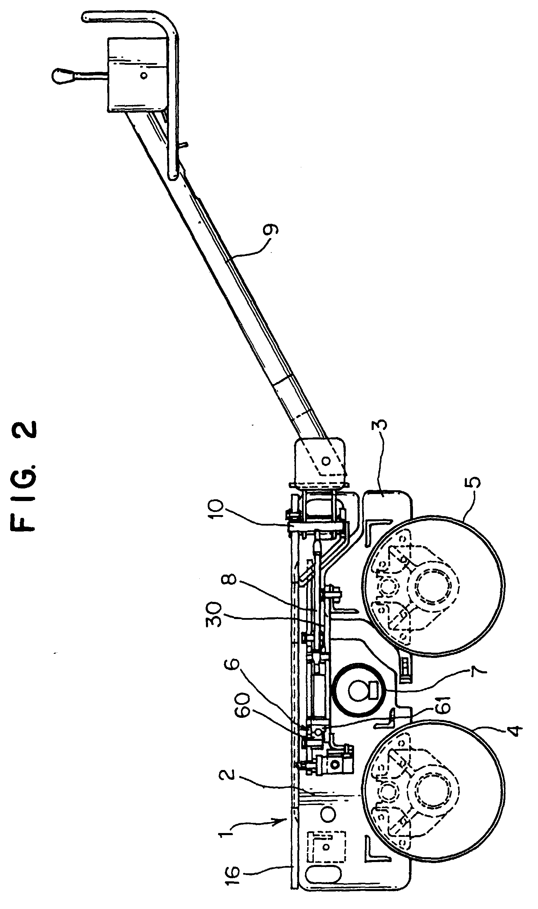

Fig.2 is a side view (partially in section) omitting the driving part as an engine mounted on the upper part shown in Fig.1;

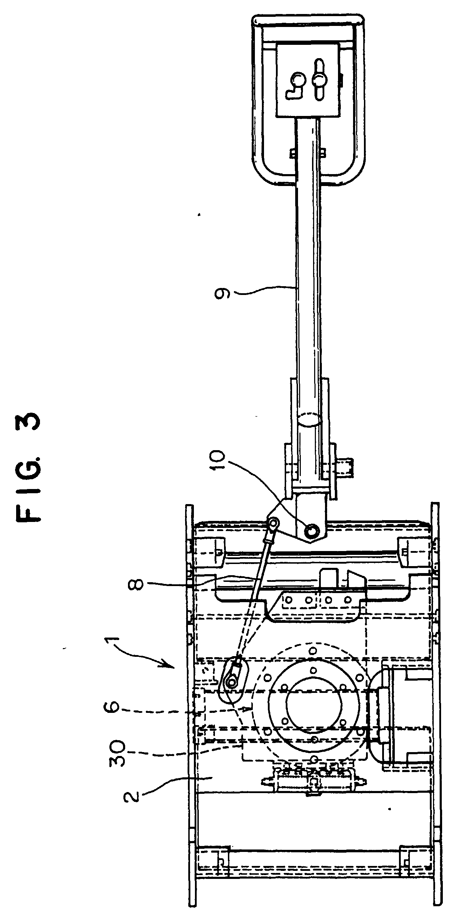

Fig.3 is a plan view of Fig.2;
Fig.4 is a plan view for explaining the steering condition of the embodiment, and (a) is a condition of steering to the right, (b) is a condition of steering to the left; and
Fig.5is a view for explaining the steering condition (right direction) of the manually steering hand guide roller.

In the drawings, reference numeral 1 designates a roller car frame, 2 is a front supporting frame, 3 is a rear supporting frame, 4 is a front roller, 5 is a rear roller, 6 is a turning bearing, 7 is a vibration generator, 8 is a rod, 9 is a handle bar, 10 is a handle axis, and 18 is a driving part.

### THE PREFERRED EMBODIMENT OF THE INVENTION

As shown, the car frame 1 comprises the front supporting frame 2 and the rear supporting frame 3, and on the car frame 1, the driving part 18 composed of the engine and others are provided via a base plate 16. In the car frame 1, the rear supporting frame 3 is composed of a part of the upper side of the rear roller 5, while the front supporting frame 2 is formed to cover largely over the rear supporting frame 3. Further, the front supporting frame 2 and the rear supporting frame 3 are mutually turnable via the turning bearing 6 at the center of the car. More specifically, an outer wheel 60 of the turning bearing 6 is screwed with bolts, respectively in the front supporting frame 2, and an inner wheel 61 is screwed in a base plate 30 extending from the rear supporting frame 3.

The front supporting frame 2 is turnably pivoted at the rear part with the handle bar 9. A bracket of the handle axis 10 is connected with the rod 8, and the end part of the rod 8 is connected with the base plate 30. The base plate 30 is a member which extends from the rear supporting plate 3 and is screwed with the inner wheel 61 of the turning bearing 6. Thus, by connecting the base plate 30 and the rod 8, if the handle bar 9 is actuated, the rear supporting frame 3 is turned (with respect to the front supporting frame 2) by the linkage therebetween.

The vibration generator 7 is installed under the turning bearing 6, and the vibration therefrom is respectively transmitted to the front roller 4 via the front supporting frame 2, and to the rear roller 5 via the turning bearing 6, the base plate 30 and the rear supporting frame 3.

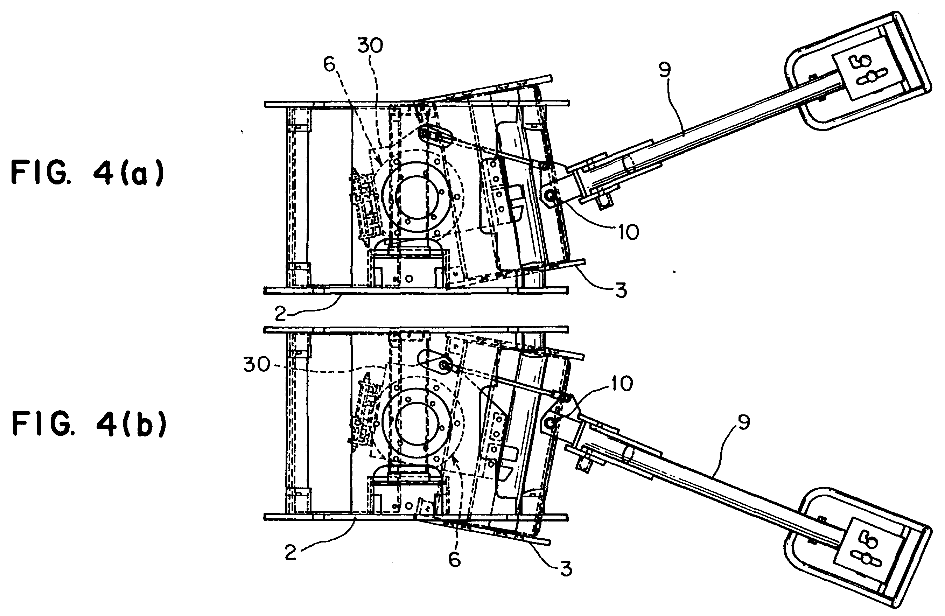

The steering example of the present embodiment will be explained with reference to Fig.4. When the car 1 is to be steered to the right, the handle bar 9 is pushed to the right as shown in the same (a). The actuation of the handle bar 9 tilts right-upward the rear supporting frame 3 via the rod 8 and the base plate 30, and similarly tilts the rear roller 5 right-upward. As a result, if the car main body is advanced, it curves to the right. When the car 1 is to be steered to the left, the handle bar 9 is pushed to the left as shown in the same (b).

As is seen, in the instant embodiment, the pushing direction of the handle bar 9 agrees with the steering direction of the car 1, so that the operator can easily operate without much experience. As it is not necessary to move the whole of the car but is enough to move the rear roller 5 only, the labor is sufficient with a small amount. In particular, in the case of the present embodiment, the car frame 1 is almost composed with the front supporting frame 2, and since the rear supporting frame 3 for supporting the rear roller 5 is composed with the rear one part of the car main body, a load to be required for moving the handle bar 9 is considerably reduced, and people with less physical strength can operate the steering. The steering mechanism is sufficient with mutual turnability of the front supporting frame 2 and the rear supporting frame 3, so that the structure is simple with cheap manufacturing cost.

As mentioned above, according to the hand guide roller of manually steering type of the present invention, the pushing direction of the handle bar 9 agrees with the steering direction of the car 1, so that the operator can easily operate without much experience. Further, only the moving of the rear roller is required, and the pushing and pulling labor of the handle bar. The steering mechanism is very simple, and the manufacturing may be realized with low cost.

## Claims

1. A hand guide roller of manually steering type to be steered by pushing and pulling a handle bar by man power in a horizontal direction, characterized by mutually and turnably connecting a front support frame for supporting a front roller and a rear support frame for supporting a rear roller, directly or indirectly connecting the handle bar to a rear supporting frame, and linking horizontal action of the handle bar with the steering directional action of the rear roller.

2. The hand guide roller of manually steering type as set forth in claim 1, characterized by composing the rear supporting frame only above the rear roller such that the front supporting frame covers thereover.
